# Europäisches Patentamt
# European Patent Office
# Office européen des brevets

(19)

(11) Publication number: **0 213 882 B1**

## EUROPEAN PATENT SPECIFICATION

(45) Date of publication of patent specification: **01.02.95**    (51) Int. Cl.⁶: **B01F 7/08**, B29B 7/10

(21) Application number: **86306439.0**

(22) Date of filing: **20.08.86**

---

(54) **Closed mixing machines.**

---

(30) Priority: **22.08.85 JP 184506/85**

(43) Date of publication of application:
**11.03.87 Bulletin  87/11**

(45) Publication of the grant of the patent:
**01.02.95 Bulletin  95/05**

(84) Designated Contracting States:
**DE GB IT**

(56) References cited:
**GB-A- 1 187 178**
**GB-A- 2 024 635**
**GB-A- 2 072 028**
**US-A- 3 230 581**

(73) Proprietor: **KABUSHIKI KAISHA KOBE SEIKO
SHO**
**3-18 Wakinohama-cho 1-chome**
**Chuo-ku**
**Kobe 651 (JP)**

(72) Inventor: **Asai, Toshihiro**
**8-5-516, Tsuchiyama-cho**
**Nada-ku**
**Kobe (JP)**
Inventor: **Hagiwara, Katsunobu**
**23-14, Higashiochiai 3-chome**
**Suma-ku**
**Kobe (JP)**

(74) Representative: **BROOKES & MARTIN**
**High Holborn House**
**52/54 High Holborn**
**London, WC1V 6SE (GB)**

---

Rank Xerox (UK) Business Services
(3. 10/3.0 9/3.3.3)

EP 0 213 882 B1

**Description**

The present invention relates to a closed mixing machine, and more particularly a mixing machine for mixing rubber or plastic materials.

A closed mixing machine is used for batch mixing of rubber or plastic materials. In particular, such a machine may provide plasticization mixing of rubber material, and batch mixing of a carbon master with or without a sulfurizing agent in manufacturing rubber products such as a tyre.

In such a mixing machine, it is generally desirable to provide a reduced mixing time for improved productivity and an increased degree of dispersion of additives for improved mixing, and to prevent excessive heat generation of the mixing material.

The mixing performed by a batch-type mixing machine includes basic processes consisting of macro = dispersion distributive mixing and micro-dispersion of the material. Macro-dispersion is mainly caused by an axial propulsive force created by helical vanes of a rotor rotatable in a mixing chamber, while the micro dispersion is caused by a strong shearing force exerted by the vanes on the material in a direction normal to the rotor axis, as disclosed in Japanese Patent Laid-Open Publication Nos. 58-4567, 58-887, 58-888, 58-5094 and 59-31369.

The conventional mixing machines proposed in the foregoing documents provide improvements relating only to the macro-dispersion by modifying the length and helical angle of the rotor vanes, and a ratio of the length to the diameter of the mixing chamber. Such improvements were sought to increase productivity and to improve mixing quality, while keeping the material at a relatively low temperature during the mixing. However, the foregoing mixing machines failed to provide effective micro-dispersion of the material.

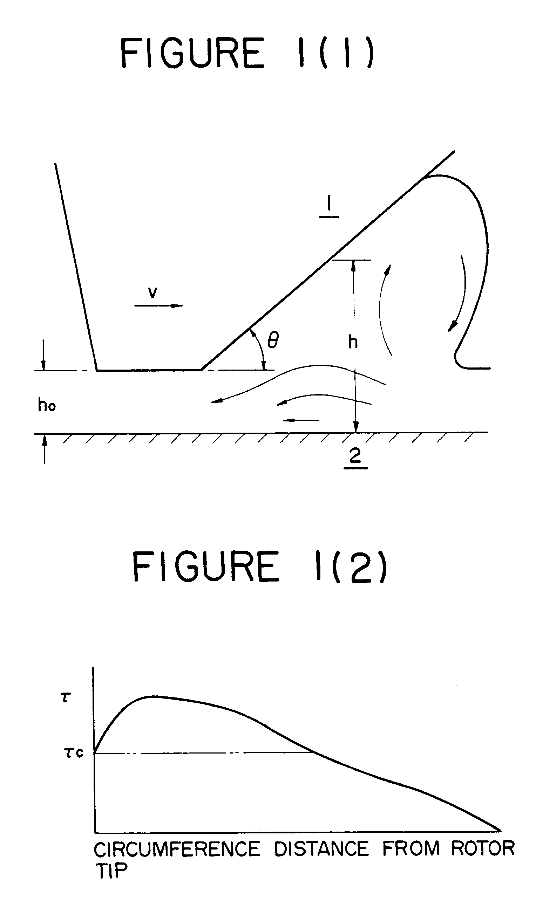

The micro-dispersion is described more specifically with reference to Figures 1 to 4 of the accompanying drawings.

Figure 1 shows the manner in which the material flows in the direction normal to the rotor axis of the conventional mixing machine and also the manner in which a shearing stress acts on the mixing material. The shearing stress $\tau$ varies in strength at different points distributed in a plane normal to the axis of the rotor.

A greater shearing force or stress created in a region near a rotor tip serves to shear and plasticize the mixing material, such as a rubber material, and to disperse additives such as carbon black. In Figure 1, reference numerals 2, v, ho, h and $\theta$ indicate a wall of the mixing chamber, a rotor speed, a tip clearance, a distance between a rotor front face and the chamber wall, and a front (inclusion) angle, respectively.

It is important to disperse the additives in the mixing material when manufacturing tyres. To achieve sufficient dispersion, the rotor needs to apply a shearing force greater than a predetermined minimum shearing stress $\tau_c$ to the material. Accordingly, an increased shearing stress is requires to achieve improved micro-dispersion.

When mixing rubber material, the shearing stress $\tau$ is given by the following expression (1), and if a drag flow concept can be adopted, a rate of shear $\dot{\gamma}$ is given by the following expression (2):

$$\tau = K.\dot{\gamma}^n \qquad (1)$$

$$\dot{\gamma} = \frac{\pi R N}{60 h} \qquad (2)$$

where n is a viscosocity index greater than O, R is a rotor diameter, N is a rotor rotation speed (rpm), and K is a viscosity coefficient (which increases as the temperature of the rubber material increases). In view of the foregoing behaviour of the mixing material, the following arrangement can be envisaged to improve the micro-dispersion of the mixing machine:

(A) Increasing the shearing stress $\tau$ in an overall cross section normal to the rotor axis while enlarging the shearing region so that $\tau > \tau_c$

(B) Increasing the opportunity for the material to pass through the region so that $\tau > \tau_c$ near the rotor tip.

The arrangement (A) means to increase $\tau$ of the expression (1) as a whole of the shearing region, and more particularly, from the arrangement (A) the following arrangement can be envisaged:

(A-1) Increasing N in the expression (2) with a predetermined cross-sectional shape of the rotor unchanged.

(A-2) Decreasing ho in the expression (2) with a pre-determined N.

(A-3) Decreasing h and hence $\theta$ with a pre-determined N and ho.

These arrangements have been practiced independently or jointly in the conventional mixing machine. However, they did not exhibit an advantageous result for the following reasons.

A drawback with the arrangements (A-1) and (A-2) is that the maximum shearing stress which can be obtained at the tip region increases to such an extent that excessive torque is caused at the time of charging the material in the initial mixing operation, and a rapid increase of temperature occurs which quickly decreases $\tau$ due to a decrease in the viscosity coefficient K as the temperature of the rubber material increases. As a result, the micro-dispersion cannot be improved. Such a drawback becomes serious if the material is to be mixed at a low temperature.

A drawback of the arrangement (A-3) is that the rotor fails to pull the material into the chamber at the initial stage of the mixing operation, therefore increasing the period of time for completing the operation.

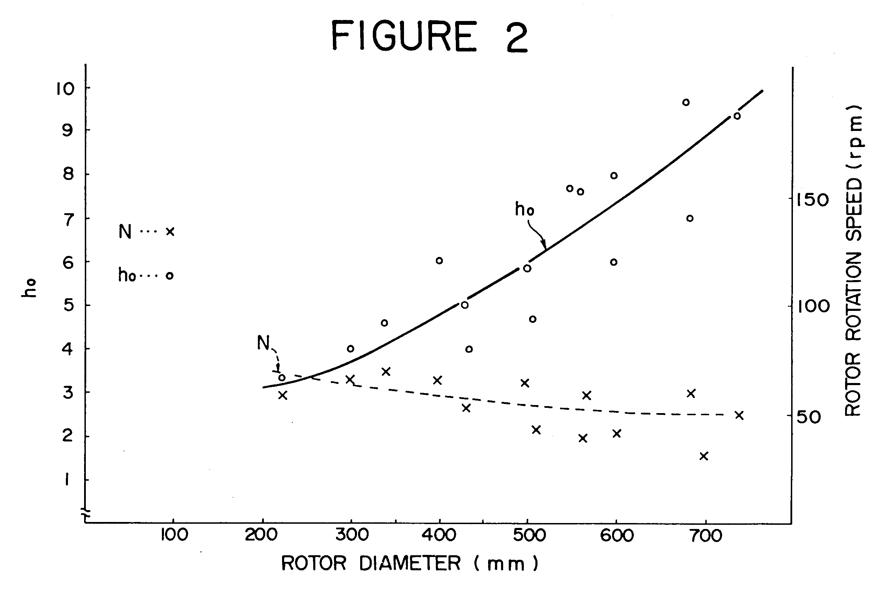

As will be understood from the foregoing description, the scope of the arrangement (A) for increasing N and decreasing h is restricted to a certain extent. In view of such restriction, the batch-type mixing machine for mixing rubber materials needs to be designed and manufactured based on empirically established standards. Figure 2 shows a part of the specifications for designing a conventional batch-type mixing machine, in which the tip clearance ho and the rotation speed N are determined on the basis of a certain standard regardless of the rotor diameter R. Specifically N is in the range of 40 - 70 rpm.

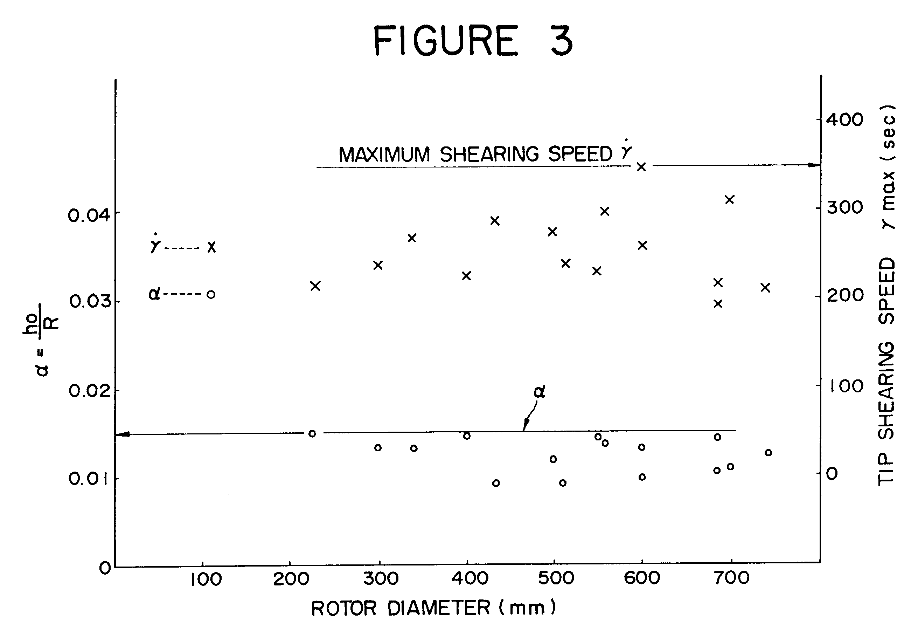

This arrangement is apparent from Figure 3 which shows that the maximum shearing speed $\tau$ max (only at the rotor tip region) is lower than 350 $sec^{-1}$, and the ratio $\alpha$ of the tip clearance ho to the rotor diameter R, ie ho/R is set in the range of 0.01 - 0.015 regardless of the size of the mixing machine.

The arrangement (B) seeks to increase the amount of the material which undergoes the shearing stress $\tau$ greater than the predetermined shearing stress $\tau c$ ( $\tau > \tau c$) without increasing $\tau$ as exerted by the arrangement (A). Specifically, the following arrangement is envisaged:

(B-1) Increasing the number of rotor vanes to thereby allow an increased amount of the material to be subject to the shearing stress.

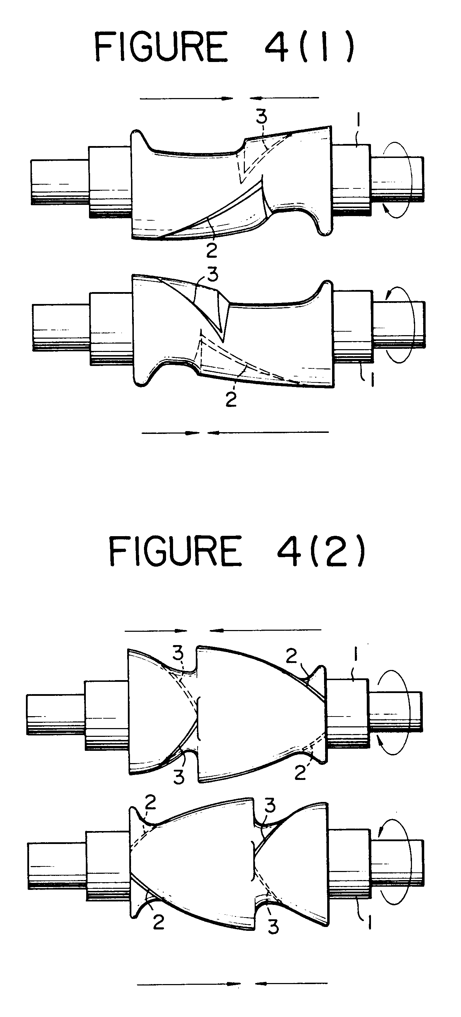

According to the arrangement (B-1), a pair of twin-vane rotors 1 each having a shorter vane 3 and a longer vane 2 and being rotable in a mutually opposite direction as shown in Figure 4(1) are replaced by a pair of quadruple-vane rotors 1 each having two shorter vanes 3 and two longer vanes 2, each rotor being rotatable in a mutually opposite direction as shown in Figure 4(2). The quadruple-vane rotors complete the mixing in a shorter period of time than the twin-vane rotors, and increase the productivity by 20% in the break-down mixing of a natural rubber and in the master batch mixing of the carbon black.

The provision of the increased number of vanes, however, reduces the effective mixing space of the mixing chamber, and thus decreases the axial flow rate of the material to thereby impair the degree of mixing. As a result, the shape of the vanes has to be modified.

To further increase the number of rotor vanes, for instance to form a six-vane rotor or a quadruple-vane rotor with additional vanes, would increase the possibility of occurrence of the foregoing drawback.

The above-described drawbacks in the conventional arrangements to improve the micro-dispersion of the material are summarized as follows:

Increasing the shearing stress by decreasing ho and by increasing N causes excessive torque and excessive heat generation. Increasing the number of rotor vanes increases the opportunity for the material to undergo the shearing stress but impairs the degree of mixing.

According to the present invention there is provided a mixing machine in which shearing stress $\tau$ acting on a material to be mixed in a radial direction in a plane normal to the rotor axis is kept at no more than the conventional or typical value ( $\tau$ max > 350), while an increased amount of the material is deliberately allowed to pass a region of the space defined by and between the rotors and an inner wall of a mixing chamber, the space permitting a shearing stress $\tau$ greater than a determined value of shearing stress $\tau_c$( $\tau > \tau_c$ ), so as to enable the mixing material to undergo the shearing stress effectively in a reduced period of time.

According to the invention, the foregoiing arrangement (B) can be achieved by increasing the rotor tip clearance ho and increasing rotation speed N to a speed higher than the conventional typical speed.

More specifically, according to the invention, a mixing machine comprises a casing and a pair of end frames for jointly defining a closed mixing chamber, and a pair of parallel rotors disposed in the latter for rotating in mutually opposite directions, wherein a ratio $\alpha$ of a rotor tip clearance ho to a rotor diameter R, ie ho/R, is 0.015 $<\alpha<$ 0.04, a rotor rotation speed N is in the range of 70 - 250 rpm, a differential rotation speed ratio of the rotors is in the rnage 1.0 - 1.2, a rotor length/chamber diameter ratio (L/D ratio) is in the range 1.2 -2.2, the rotor front or inclusion angle is in the range 15° - 35°, a rotor vane length ratio Ls/Le is in the range 0.1 - 0.48, and rotor vane helix angle $\theta l$, $\theta s$ are in the ranges 20° -45°, 0° - 45°, respectively, where numerals Ls, Ll, $\theta l$ and $\theta s$ mean respectively a length of a shorter vane, a length of a longer vane, a longer vane helix angle and a shorter vane helix angle.

In the accompanying drawings, by way of example only:-

Figure 1 is a schematic view of a shearing portion of a conventional rotor in a closed mixing chamber,

Figure 2 is a chart showing the relation between rotor diameter R and tip clearance ho, and the relation between rotor diameter R and rotation speed N of a conventional mixing machine for mixing a rubber material;

Figure 3 is a chart showing the relation between rotor diameter R, and the ratio ho/R ( = $\alpha$ ) and a rate of shear of the shearing portion ( $\gamma$ max) of the conventional mixing machine,

Figure 4(1) and 4(2) are plan views showing conventional twin-vane rotors and quadruple-vane rotors, respectively,

Figure 5(1) is a diagram of a system for a mixing machine according to the invention,

Figure 5(2) is a schematic view showing a shearing portion of the rotor in a mixing machine of the invention,

Figure 6 is a chart showing the relation between the rotation speed N and the required period of mixing time with a uniform quality of mixture (Mooney viscosity is 75) in a master batch operation of SBR and a carbon black,

Figure 7 is a chart showing the relation between the rotation speed N and the discharge material temperature Tdis in the operation of Figure 6,

Figure 8 is a chart showing the effects of the ratio ($\alpha$) of tip clearance to rotor diameter on the relationship between the rate of shear $\dot{\gamma}$max at a rotor tip and the corresponding mixing time with a uniform quality of mixture (Mooney viscosity is 75), in the master batch mixing of the carbon black,

Figure 9 is a chart showing the effects of the ratio $\alpha$ on the relationship between $\dot{\gamma}$max and the mixing time in the break-down mixing of a natural rubber material with a uniform quality of mixture (Mooney viscosity is 75),

Figure 10 is a chart similar to Figure 8, showing results obtained in a conventional mixing machine

Figure 11 is a chart similar to Figure 9, showing results obtained in a conventional mixing machine,

Figure 12 is a plan view showing the shape of a rotor vane in a 16-litre mixing machine according to an embodiment of the invention,

Figure 13 is a cross-sectional view of the rotor vane of Figure 12,

Figure 14(1) is a view showing a position of the rotor in the chamber, and

Figure 14(2) is an expansion view of a rotor vane embodying the invention.

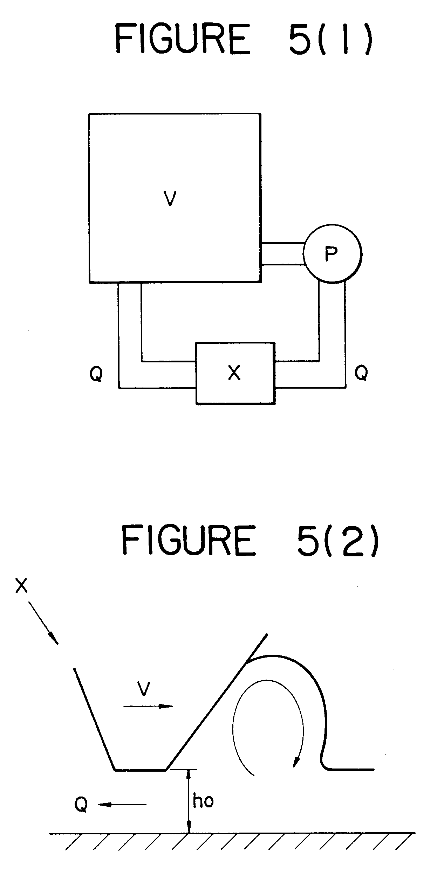

Figures 5(1) and 5(2) schematically show a closed mixing machine in which a pump designated by reference numeral P impels the stored charging material V to provide a flow Q of the material to a shearing region X of the rotor, where the shearing stress is greater than a determined value of shearing stress $\tau$c. When the material flow Q is increased, it becomes possible to reduce the period of time required to allow all the charging material V to undergo an effective shearing stress which is greater than the determined value $\tau$c.

The shearing stress $\tau$ is maintained so as not to become greater than the typical stress value $\tau'$ of the conventional machine, with the result that excessive torque and local heat generation can be curbed at an early stage of the operation of the machine. Further, since the number of vanes need not be increased, mixing capacity is not impaired by a reduction of the mixing space.

The relation between the material flow Q and the shearing stress $\tau$ is expressed by configurational conditions and rotation speed N of the rotor as follows:

The material flow Q which passes the rotor tip in the direction normal to the rotor axis, ie the radial direction, is expressed in view of the drag flow by the following express (3).

$$Q = \tfrac{1}{2} V.ho.L \qquad (3)$$

where

Q is material flow (cm$^3$sec),

V is rotor rotation speed (cm/sec),

ho is rotor tip clearance,

L is rotor axial length (cm),

from

$$V = \frac{\pi R N}{60}$$

4

the expression (3) is

$$Q = \frac{1}{120} \quad \pi.R.N.ho.L \qquad (4).$$

Thus Q can be increased by increasing ho or N.

If $\tau$ is represented by a maximum shearing stress $\tau$ max obtained at the tip region while $\tau$ is distributed in the plane normal to the rotor axis as shown in Figure 1, the following expression (5) is obtained from the expression (1) and (2),

$$\tau \, max = K \left( \frac{\pi.R.N}{h_o 60} \right) n \qquad (5)$$

Accordingly, in order to increase Q with $\tau$ max kept at a determined value and without increasing excessively, N and ho should be increased while keeping $\frac{RN}{ho}$ in the expression (5) at a determined value. Specifically, N and ho are increased at a substantially equal rate.

For ascertaining the advantageous effect of the above-described arrangement, that is, how effectively heat generation and excessive torque are deterred to achieve a reduced mixing time, a performance test has been made on a simulator model of the mixing machine which has non-intermeshed rotors and a chamber having an inside diameter (203 mm) equal to that of a minimum-sized real machine and a length L being one third of length of the latter. For testing, ho and N have been varied for various values of differential rotation speed ratio of one rotor to the other rotor (1.0 - 1.2). The effect of phase angle of one rotors tip to the other rotors tip has also been evaluated for a differential rotation speed ratio of 1.0. The simulator machine also provides a chamber which allows an intermeshed rotor mode. Performance test of mixing has also been made in an intermeshed rotor mode.

In testing the break-down mixing of a natural rubber and the master batch mixing of a synthetic rubber (SBR ie styrene-butadiene rubber) and a carbon black are carried out. A micro-dispersion effect has been estimated from the results of a mixing time tm required to attain a determined quality, indicated by Mooney viscosity and by dispersion degree of carbon black, of the material to be mixed.

Also evaluation has been made on the discharge temperature Tdis of the rubber material at the time when the material has attained the determined quality, and also the energy Esp (KWH/kg) consumed in the mixing operation.

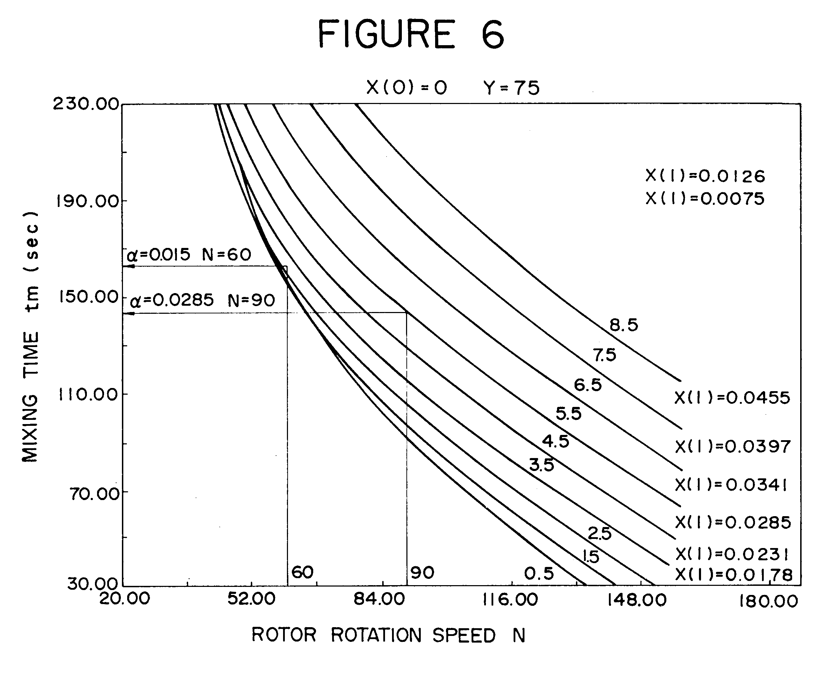

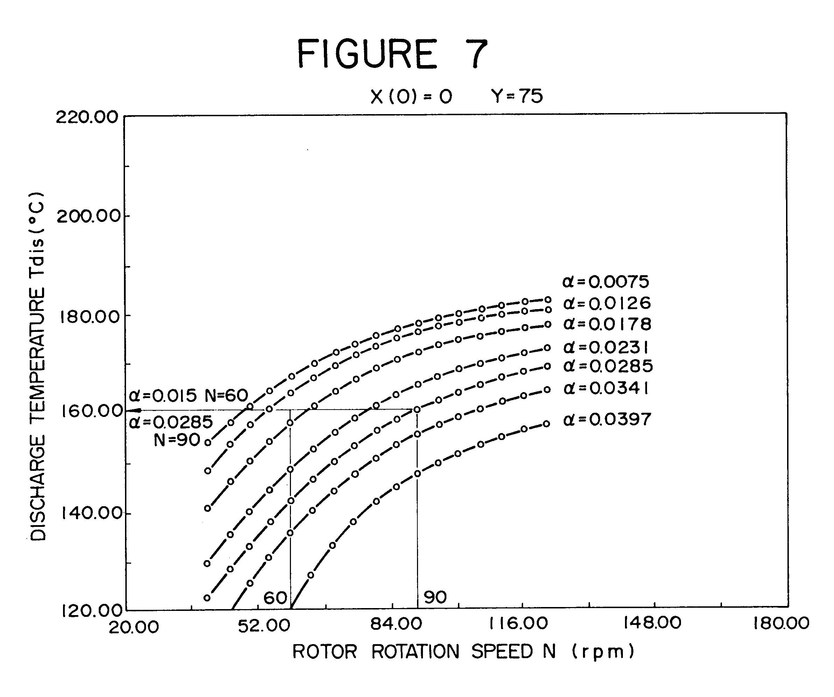

The results of the test (in the non-intermeshed mode under 1.2 of differential rotation ratio) are shown in Figures 6 and 7, where the quality of the mixed material is evaluated by Mooney viscosity. The effect of ho is shown on the relation between the discharge temperature Tdis and the rotation speed N established when a determined value of Mooney viscosity is attained. Since the tip clearance ho differs depending on different sizes of the mixing machine, the ratio $\alpha$ of the tip clearance ho to the rotor diameter R ($\alpha$ = ho/R) is given in place of ho in Figures 6 and 7. This replacement is possible because ho increases as R increases.

Considering the design conditions of the conventional machine shown in Figures 2 and 3, $\alpha$ is smaller than 0.015, and N is 40 - 70 rpm in the mixing machine for mixing the rubber material. In particular, N is 60 rpm when the rotor diameter is about 200 mm. Here, if standard values are given by $\alpha$ = 0.015 and N = 60 rpm, it can be seen from Figure 6 that if ho and N are increased to obtain $\alpha$ = 0.0285 and N = 90 rpm, it becomes possible to decrease the mixing time without impairing the quality of the material in comparison with the standard mixing time. Further, it is known from Figure 7 that the discharge temperature Tdis is maintained at a value approximately equal to the standard discharge temperature.

In case of the even rotation operation (the differential rotation ratio is 1.0) with various phase angle and the intermeshed-rotor mode, similar results have been obtained although the results are not shown.

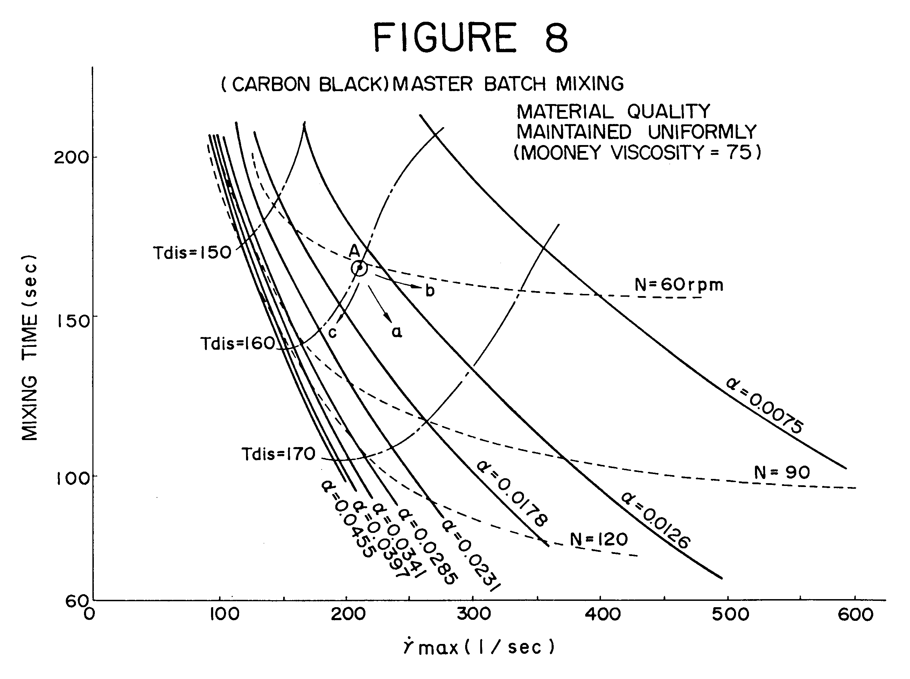

The obtained results are transformed into the relation between the maximum rate of shear $\dot{\gamma}$ max and the mixing time tm to be shown in Figure 8, where the influence of N and $\alpha$ and the result of Tdis are also shown.

Point A indicates the results from the conventional machine having the standard values: $\alpha$ = 0.015 and N = 60 rpm. If the values are changed in the direction of arrow C (by which both $\alpha$ and N increase), it can be seen that the required mixing time is reduced with the determined quality and discharge temperature maintained, which means tha the micro-dispersion effect is improved.

Following the direction of arrow C results in a decrease of $\dot{\gamma}$ max and hence a decrease of $\tau$ max. However, the micro-dispersion effect has been improved accordingly. This improvement is due to the fact that since $\tau$ max is decreased by the increase of ho, and the distance h between the rotor front face and the chamber wall is unchanged and N is increased,

from $\dot{\gamma} = \pi RN/60h$ and $\tau = K.\dot{\gamma}^n$,

the shear stress $\tau$ of the front face is increased, and hence mean stress value of the total shearing stress $\bar{\tau}$ in the radial direction (ie the direction normal to the rotor axis) is kept unchanged while $\tau$ max is decreased.

On the other hand, if values are changed in the direction of arrow b (by which $\alpha$ decreases with N unchanged) or in the direction of arrow a (by which N increases with unchanged $\alpha$ ), the mixing time is reduced, but the discharge temperature $\bar{T}$dis is increased and thereby leads to the aforesaid excessive torque and local heat generation.

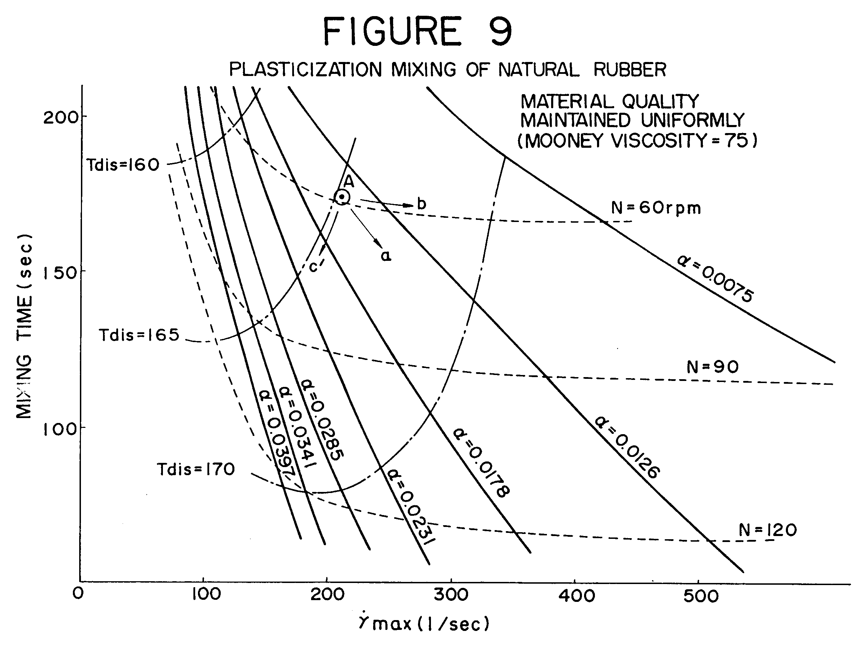

Figure 9 shows an example of the break-down mixing of natural rubber. In this case, it also becomes possible to reduce the mixing time with Tdis and the quality unchanged by following the arrow c' (by which both $\alpha$ and N increase).

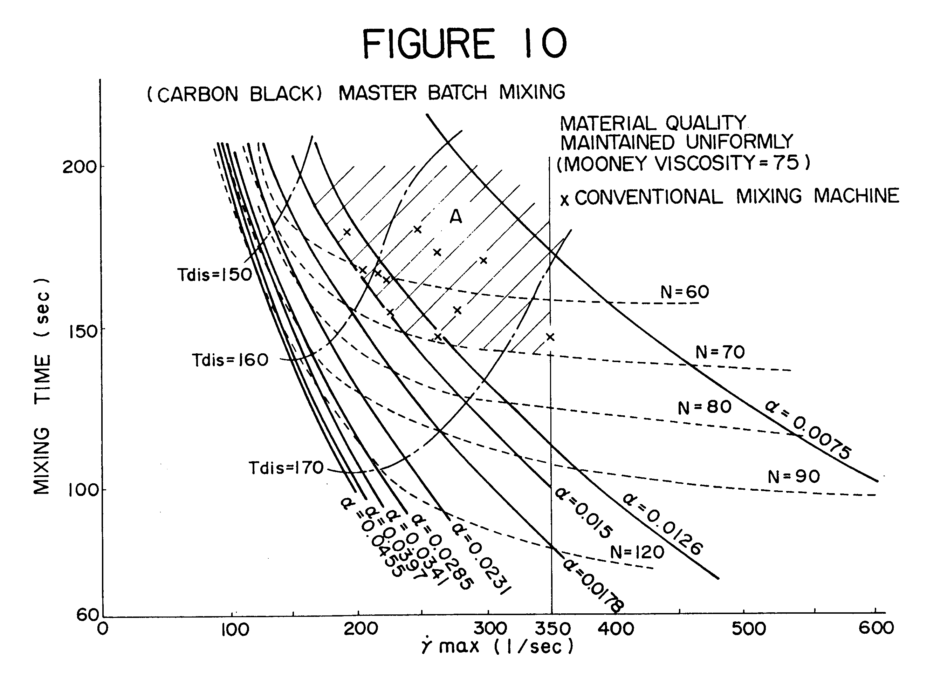

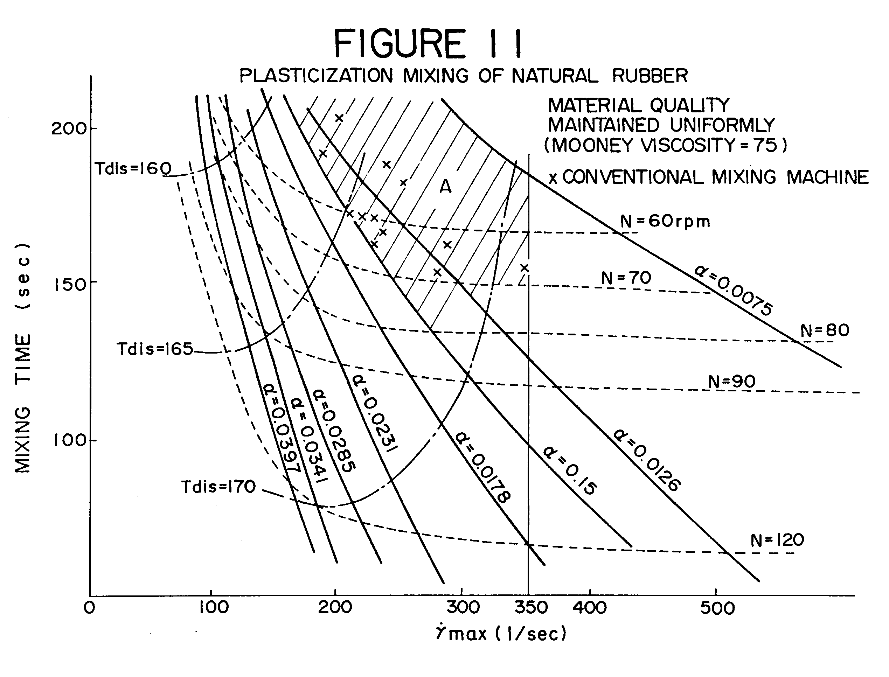

Figures 10 and 11 show a comparison of the micro-dispersion effect created by a conventional mixing machine with that of the present mixing machine, the design conditions of the conventional machine appearing with the results of Figures 8 and 9 respectively for a maximum rate of shear less than 350 rpm ( $\dot{\gamma}$ max < 350). From Figures 10 and 11, it can be seen regardless of the rotor mode that $0.015 < \alpha < 0.04$, and N is greater than the conventional value, that is, 70 - 250 rpm. The micro-dispersion effect is improved while the increase of Tdis is curbed, and thus results in relatively high productivity. Maximum limit of the rotor rotation speed N has been set at 250 rpm for the following reasons:

In case of the mixing machine for mixing rubber materials, the maximum rate of shear $\dot{\gamma}$ max obtained at the rotor tip is no greater than 350 sec$^{-1}$ at most. If the rate of shear exeeds this value, the mixing rubber material undergoes the shearing stress of greater than $10^7$ dyne/cm$^2$, which value will cause degradation of the rubber due to the rupture of rubber molecules and a rapid thermal increase. Accordingly, the maximum limit of the rotor rotation speed N for the present mixing machine can be obtained when the maximum value of the rate of shear at the rotor tip is limited to 350 sec$^{-1}$.

In the case of the present machine, since $0.015 < \alpha < 0.04$ ( $\alpha$ = ho/R), and $\dot{\gamma}$max = $\pi N/60\alpha < 350$, hence N < 6684.55 x $\alpha$.

Here, the maximum limit value of $\alpha$ is 0.04.

Introducing $\alpha = 0.04$ to the above expression, and we obtain

N < 267 rpm.

Consequently, the maximum value of N can be limited as follows:

N ≦ 250 rpm

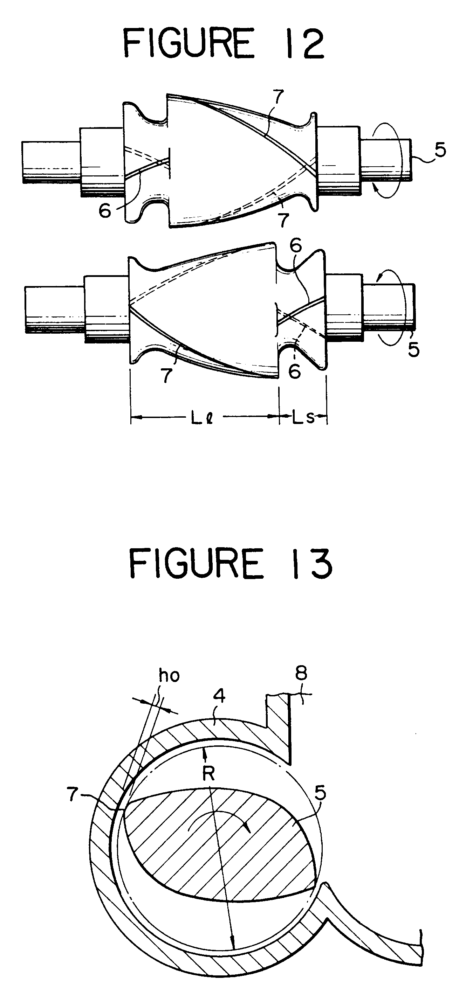

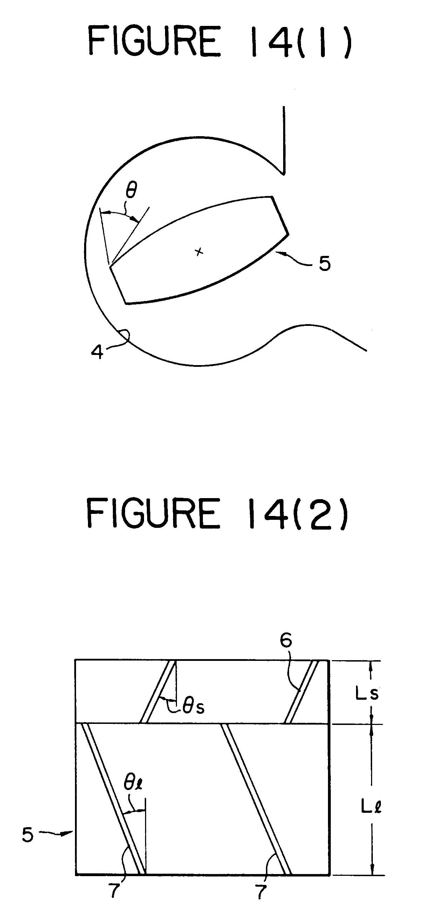

Figures 12 to 14(1) and 14(2) show a pair of rotors 5 disposed in parallel in a mixing chamber 4 for rotating in mutually opposite direction. Reference numerals 6, 7 and 8 designate respectively a shorter vane, a longer vane, and a material supply inlet. Regardless of the rotor type, ie intermeshed type or non-intermeshed type, the rotor shape is determined as follows:

In order to achieve a high productivity under the condition of a relatively high rotation speed and an increase of ho without developing a thermal heterogenity or deteriorating the degree of mixing, the following conditions must be satisfied.

Differential rotation speed ratio of one rotor to the other is in the range 1.0 - 1.2. This range is determined to make the two rotors consume an uniform amount of energy and generate an uniform amount of heat, if any.

From this view point, the differential rotation ratio is most preferably 1.0 (that is, the equal speed or the intermeshed rotor mode). However, no critical problem is created provided the ratio is smaller than 1.2 (non-intermeshed rotor mode). From the view of superior hromogeneity of the mixture, the phase angle of one rotor tip to the other rotor tip is in the range 0° - 45° preferably (0° means synchronized) for a differential rotation ratio of 1.0. However, no critical problem is created out of the range defined above.

The ratio rotor length/chamber inside diameter is in the range of 1.2 - 2.2. Maximum limit is determined by the mechanical strength of the rotor, and the minimum limit is selected in view of the surface area required for cooling the rotor.

Front angle $\theta$ of the rotor is in the range 15° - 35°. 15° ≤ $\theta$ is required to obtain a suitable inclusion or raking effect at the time of charging the material, and $\theta$ ≥ 35° is required to prevent an adherence of the material to the rotor.

Differential rotor length ratio of a shorter vane to a longer vane (ls/Ll) is determined to be in the range of 0.1 - 0.48. Helix angles $\theta_l$, $\theta$s of the longer and the shorter vanes are determined in the ranges 20° - 45° and 0° - 45°, respectively. These ratios are selected to prevent a decrease in the degree of mixing.

Example

Using mixing machines of non-intermeshed rotor type having a mixing chamber specified by an inside diameter of 220 mm and an effective volume (capacity) of 16 litres, comparison has been made between the results obtained by a conventional machine operating with the typical conditions (N = 60 rpm, $\alpha$ = 0.015) and the results obtained by the present machine operating with the conditions according to the invention (N = 90 rpm, $\alpha$ = 0.029). Each of the two rotors has four vanes.

The mixing operations are a break-down mixing of a natural rubber material and a master batch mixing of carbon black for producing tyres. The mixing was continued until the Mooney viscosity and carbon dispersion reached a pre-determined level. Then the mixing time $_t$m, discharge temperature Tdis, consumed energy Esp (KWH/kg), maximum batch amount of the charged material, material inclusion (ram-descending time) were comparted to one another.

Significant improvements were obtained by the present mixing machine in comparison with the conventional machine as given hereinbelow:

(a) Productivity (mixing time) was
   increased by 70% (natural rubber)
   increased by 30% (carbon master)
(b) Discharge material temperature was
   not changed (natural rubber)
   not changed (carbon master)
(c) Consumed amount of energy was
   decreased by 13% (natural rubber)
   decreased by 4% (carbon master)
(d) Peak torque was
   reduced by 10% (natural rubber)
   reduced by 2 - 10% (carbon master)
(e) Degree of material inclusion and maximum amount of material charged were,
   when an uniform amount of the material was charged, the period of ram-descending time was
   reduced by 50% (natural rubber)
   reduced by 25% (carbon master),
   and the maximum amount of the material charged was
   increased by 9% (natural rubber)
   increased by 6% (carbon master).

As illustrated by the arrangement described hereinabove, a mixing machine embodying the present invention:

(1) curbs undesirable increases in the material temperature, occurrence of excessive torque and local heat generation;
(2) reduces the mixing time and decreases peak torque;
(3) reduces consumption of energy;
(4) increases material inclusion; and
(5) increases the maximum batch amount of the material.

**Claims**

**1.** A mixing machine comprising a closed mixing chamber and a pair of oppositely rotatable rotors disposed in parallel in the chamber, each rotor having at least one longer vane and at least one shorter vane, wherein :

   (1) the ratio $\alpha$ of a tip clearance ho to a rotor diameter R (ho/R) is given by 0.015<$\alpha$<0.04;
   (2) the rotation speed of the rotors is in the range 70 - 250 rpm;
   (3) the ratio of the speed of one rotor to that of the other is in the range 1.0 - 1.2;
   (4) the rotor length/diameter ratio is in the range 1.2 - 2.2;

(5) the rotor inclusion angle is in the range 15° - 35°;

(6) the rotor vane length ratio Ls/Ll is in the range 0.1 - 0.48;

(7) the helix angle $\theta$l is in the range 20° - 45°, and

(8) the helix angle $\theta$s is in the range 0° - 45°, where Ls is the length of the longer vane, $\theta$s is the helix angle of the shorter vane, and $\theta$l is the helix angle of the longer vane.

## Patentansprüche

**1.** Mischvorrichtung, umfassend eine geschlossene Mischkammer und ein Paar gegenläufig drehbare Rotoren, die parallel in der Kammer angeordnet sind, wobei jeder der Rotoren mindestens einen längeren Flügel und mindestens einen kürzeren Flügel besitzt, wobei:

(1) das Verhältnis $\alpha$ eines Spitzenabstandes ho zu einem Rotordurchmesser R (ho/R) gegeben ist durch: 0,015 < $\alpha$ < 0,04,

(2) die Rotationsgeschwindigkeit der Rotoren im Bereich von 70 bis 250 U/min liegt,

(3) das Verhältnis der Geschwindigkeit des einen Rotors zu der des anderen Rotors im Bereich von 1,0 bis 1,2 liegt,

(4) das Verhältnis von Rotorlänge zu Rotordurchmesser im Bereich von 1,2 bis 2,2 liegt,

(5) der Rotoreinschlußwinkel im Bereich von 15° bis 35° liegt,

(6) das Verhältnis der Rotorflügellängen Ls/Ll im Bereich von 0,1 bis 0,48 liegt,

(7) der Steigungswinkel $\theta$l im Bereich von 20° bis 45° liegt, und

(8) der Steigungswinkel $\theta$s im Bereich von 0° bis 45° liegt,

wobei Ll die Länge des längeren Flügels, $\theta$s der Steigungswinkel des kürzeren Flügels und $\theta$l der Steigungswinkel des längeren Flügels ist.

## Revendications

**1.** Machine à mélanger comportant une chambre close de mélange et une paire de rotors tournant un sens inverse agencés en parallèle dans la chambre, chaque rotor ayant au minimum une pale plus longue et au minimum une pale plus courte, dont:

(1) le rapport $\alpha$ du dégagement d'extrémité ho par rapport au diamètre de rotor R (ho/R) est obtenu à partir de 0,015 < $\alpha$ < 0,04;

(2) la vitesse de rotation des rotors se situe dans la fourchette de 70 à 250 t/mn;

(3) le rapport de vitesse d'un rotor par rapport à l'autre rotor se situe dans la fourchette de 1,0 à 1,2;

(4) le rapport de longueur/diamètre de rotor se situe dans la fourchette de 1,2 à 2,2;

(5) l'angle d'inclusion de rotor se situe dans la fourchette de 15° à 35°;

(6) le rapport de longueur de pale de rotor Ls/Ll se situe dans la fourchette de 0,1 à 0,48;

(7) l'angle hélicoïdal $\theta$l se situe dans la fourchette de 20° à 45°;

(8) l'angle hélicoïdal $\theta$s se situe dans la fourchette de 0° à 45°, dont Ls est la longueur de la pale la plus longue, $\theta$s est l'angle hélicoïdal de la pale la plus courte, et $\theta$l est l'angle hélicoïdal de la pale la plus longue.

# FIGURE I(I)

# FIGURE I(2)

CIRCUMFERENCE DISTANCE FROM ROTOR TIP

FIGURE 2

ROTOR ROTATION SPEED (rpm)

ROTOR DIAMETER ( mm )

N ···· x
ho ···· o

ho

FIGURE 3

# FIGURE 4(1)

# FIGURE 4(2)

# FIGURE 5(1)

# FIGURE 5(2)

FIGURE 6

$X(0)=0$   $Y=75$

$X(1)=0.0126$
$X(1)=0.0075$
$X(1)=0.0455$
$X(1)=0.0397$
$X(1)=0.0341$
$X(1)=0.0285$
$X(1)=0.0231$
$X(1)=0.0178$

8.5
7.5
6.5
5.5
4.5
3.5
2.5
1.5
0.5

$\alpha=0.015$  $N=60$
$\alpha=0.0285$  $N=90$

ROTOR ROTATION SPEED N

MIXING TIME $t_M$ (sec)

# FIGURE 7

X(0) = 0   Y = 75

Plot of DISCHARGE TEMPERATURE Tdis (°C) versus ROTOR ROTATION SPEED N (rpm).

Curves labeled: α = 0.0075, α = 0.0126, α = 0.0178, α = 0.0231, α = 0.0285, α = 0.0341, α = 0.0397

α = 0.015 N = 60
α = 0.0285 N = 90

EP 0 213 882 B1

# FIGURE 8

(CARBON BLACK) MASTER BATCH MIXING

MATERIAL QUALITY
MAINTAINED UNIFORMLY
(MOONEY VISCOSITY = 75)

EP 0 213 882 B1

# FIGURE 9

PLASTICIZATION MIXING OF NATURAL RUBBER

MATERIAL QUALITY
MAINTAINED UNIFORMLY
(MOONEY VISCOSITY = 75)

EP 0 213 882 B1

FIGURE 10

# FIGURE 11

PLASTICIZATION MIXING OF NATURAL RUBBER

MATERIAL QUALITY
MAINTAINED UNIFORMLY
(MOONEY VISCOSITY = 75)

x CONVENTIONAL MIXING MACHINE

Tdis=160

Tdis=165

Tdis=170

$\alpha$=0.0397
$\alpha$=0.0341
$\alpha$=0.0285
$\alpha$=0.0231
$\alpha$=0.0178
$\alpha$=0.15
$\alpha$=0.0126
$\alpha$=0.0075

N=60rpm
N=70
N=80
N=90
N=120

A

MIXING TIME (sec)

$\dot{\gamma}$max (1/sec)

EP 0 213 882 B1

# FIGURE 12

# FIGURE 13

# FIGURE 14(1)

# FIGURE 14(2)